# EUROPÄISCHE PATENTSCHRIFT

(11) **EP 1 151 251 B1**
(45) Veröffentlichungstag und Bekanntmachung des Hinweises auf die Patenterteilung: **23.11.2005**
(21) Anmeldenummer: 99952506.6
(22) Anmeldetag: 30.09.1999
(51) Int. Cl.: G01F 1/58

(54) **ELEKTROMAGNETISCHER DURCHFLUSSMESSER UND VERFAHREN ZU SEINER HERSTELLUNG**
ELECTROMAGNETIC FLOW METER AND METHOD FOR PRODUCING SAME
DEBITMETRE ELECTROMAGNETIQUE ET PROCEDE PERMETTANT DE LE PRODUIRE

(30) Priorität: 12.02.1999 DE 19905785
(43) Veröffentlichungstag der Anmeldung: 07.11.2001
(73) Patentinhaber: Siemens Flow Instruments A/S, 6430 Nordborg (DK)
(72) Erfinder: NIELSEN, Sören, E., DK-6400 Sönderborg (DK)
(74) Vertreter: Berg, Peter
(86) Internationale Anmeldenummer: PCT/EP1999/007413
(87) Internationale Veröffentlichungsnummer: WO 2000/047954

(56) Entgegenhaltungen:
- DE-A- 3 201 562
- GB-A- 2 298 716
- US-A- 3 824 856

## Beschreibung

Die Erfindung bezieht sich auf einen elektromagnetischen Durchflußmesser nach dem Oberbegriff des Anspruchs 1 und auf ein Verfahren zu dessen Herstellung.

Ein elektromagnetischer Durchflußmesser dieser Art ist aus der US 3 824 856 bekannt. Das Innenrohr besteht aus einem Kunststoff, wie Polytetrafluorethylen oder Chloropren-Kautschuk, der nicht mit dem Fluid reagiert, dessen Durchfluß gemessen wird, und eine hohe thermische Beständigkeit und Alterungsbeständigkeit hat. Ein derartiger Kunststoff ist jedoch kostspielig. Die Verwendung von Chloropren-Kautschuk bedarf darüber hinaus in zahlreichen Ländern einer amtlichen Genehmigung. Zwischen dem Innenrohr und der Magnetspulenanordnung ist ein konzentrisches elektrisches Abschirmungsrohr aus nichtmagnetischem Metall angeordnet. Das Außenrohr besteht aus Eisen oder einem ferromagnetischen Material für den Rückschluß des magnetischen Feldes der Magnetspulenanordnung. Alternativ besteht es aus nichtmagnetischem Material. In diesem Fall ist ein Mantel aus magnetischem Material in dem die Magnetspulen umgebenden Ringraum für den Rückschluß des magnetischen Feldes angeordnet. An den Enden des Außenrohres sind radial nach innen und außen vorstehende Flansche zur Verbindung mit Anschlußrohren angeschweißt, die gleichzeitig den Ringraum an den Enden zwischen dem Abschirmungsrohr und dem Außenrohr begrenzen. Durch eine Öffnung im Außenrohr wird ein Kunstharz in den Ringraum gegossen, der nach der Aushärtung die Spulenanordnung einbettet und den Ringraum massiv ausfüllt. Da die Spulenanordnung vor dem Ausgießen des Ringraums an dem Abschirmungsrohr fixiert sein muß, ist es nicht möglich, das Abschirmungsrohr zusammen mit der daran befestigten Magnetspulenanordnung in das vorgefertigte, mit Flanschen versehene Außenrohr einzuführen. Das Außenrohr mit den Flanschen kann daher nur nachträglich in aufwendiger Weise auf dem Abschirmungsrohr aus getrennten Teilen zusammengeschweißt werden. Desgleichen pflegt man das Innenrohr, was jedoch in der US-Patentschrift nicht erwähnt ist, mittels eines in das Abschirmungsrohr eingeführten Formwerkzeugs an der Innenseite des Abschirmungsrohres anzuspritzen, wobei gleichzeitig die Flansche an den Enden des Innenrohres geformt werden. Danach wird dann das Formwerkzeug aus dem Innenrohr entfernt. Auch diese Art der Herstellung ist aufwendig.

Der Erfindung liegt die Aufgabe zugrunde, einen Durchflußmesser nach dem Oberbegriff des Anspruchs 1 und ein Verfahren zu dessen Herstellung anzugeben, der weniger kostspielig und das einfacher ausführbar ist.

Lösungen dieser Aufgabe sind in den Ansprüchen 1 und 4 gekennzeichnet.

Die Ausbildung des Innenrohres aus Polyethylen gemäß Anspruch 1 hat den Vorteil, daß dieses Material wegen seiner weltweit umfangreichen Verbreitung sehr preiswert ist, aber dennoch den Anforderungen, wie sie an Durchflußmesser gestellt werden, weitgehend genügt. Insbesondere ist es auch für Durchflußmesser in Trink- oder Abwasserleitungen geeignet. Seine Verarbeitung kann bei geringerer Temperatur erfolgen und erfordert weniger Energie. Es bedarf in der Regel keiner einzelnen nationalen amtlichen Zulassung für die Anwendung im Trinkwasserbereich.

Die Weiterbildung gemäß Anspruch 2 hat den Vorteil, daß das Innenrohr eine höhere Steifigkeit erhält, so daß es durch das hindurchströmende Fluid auch bei hohen Drücken praktisch nicht verformt wird.

Die Weiterbildung gemäß Anspruch 3 führt zum einen zu einer weiteren Erhöhung der Steifigkeit des Innenrohres und zum anderen zu einer Steigerung der Strömungsgeschwindigkeit des Fluids im Bereich des kleinsten Innendurchmessers des Innenrohres. Letzteres ergibt eine größere Meßempfindlichkeit des Durchflußmessers.

Bei dem Verfahren nach Anspruch 4 können zumindest zwei Teile des Innenrohres außerhalb des Außenrohres auf einfache Weise vorgefertigt und mit ihren zu verbindenden Enden voran axial in das Außenrohr eingeführt und innerhalb des Außenrohres stoffschlüssig verbunden werden.

Die konische Form der Endabschnitte gemäß Anspruch 5 wird bevorzugt, weil sich dadurch auf einfache Weise ein Hohlraum zur Unterbringung der Magnetspulenanordnung und Meßelektroden ergibt und auch hierbei die Meßempfindlichkeit wegen der zunehmenden Strömungsgeschwindigkeit im zylindrischen MeBabschnitt gesteigert wird.

Bei der Weiterbildung gemäß Anspruch 6 ist es möglich, alle Abschnitte des Innenrohres auf einfache Weise vorzufertigen. Zum Beispiel können bei einer serienfertigung eine Vielzahl von gleichen konischen Endabschnitten in einem einzigen, entsprechend geformten Formwerkzeug in einem Arbeitsgang geformt und der zylindrische Abschnitt von einem längeren extrudierten Rohr in der gewünschten Länge abgeschnitten werden. Die stoffschlüssige Verbindung aller Abschnitte kann danach auch innerhalb des Außenrohres durch Spiegelschweißen durchgeführt werden.

Die Weiterbildung nach Anspruch 7 ist eine weitere vorteilhafte Möglichkeit der Verbindung der Innenrohrabschnitte.

Die Weiterbildung gemäß Anspruch 8 hat den Vorteil, daß auch bei dieser Lösung das Innenrohr zusätzlich versteift und die Magnetspulenanordnung und gegebenenfalls weitere im Zwischenraum angeordnete Teile in ihrer Lage gesichert werden.

Bei der Weiterbildung gemäß Anspruch 9 können auch die Abschirmungseinrichtung zusammen mit dem Innenrohr und der Magnetspulenanordnung sowie weiterer Teile, nach einer Vorfertigung und Vormontage, auf einfache Weise in das Außenrohr eingeführt werden.

Bei der Weiterbildung gemäß Anspruch 10 bewirkt das Außenrohr einen Rückschluß des magnetischen Flusses der ( Magnetspulenanordnung.

Die stoffschlüssige Verbindung der Flansche von Außen- und Innenrohr gemäß Anspruch 11 läßt sich auf einfache Weise herstellen.

Die Weiterbildung gemäß Anspruch 12 erleichtert die konzentrische Anordnung von Außen- und Innenrohr.

Die Erfindung und ihre Weiterbildungen werden nachstehend anhand der beigefügten Zeichnungen bevorzugter Ausführungsbeispiele näher beschrieben. Es zeigen:
- Fig. 1: einen Axialschnitt durch ein erstes Ausführungsbeispiel eines erfindungsgemäßen Durchflußmessers,
- Fig. 2: einen Axialschnitt durch das Ausführungsbeispiel nach Fig. 1 vor dem Zusammenbau des Innenrohres und
- Fig. 3: einen Axialschnitt durch ein zweites Ausführungsbeispiel eines erfindungsgemäßen Durchflußmessers.

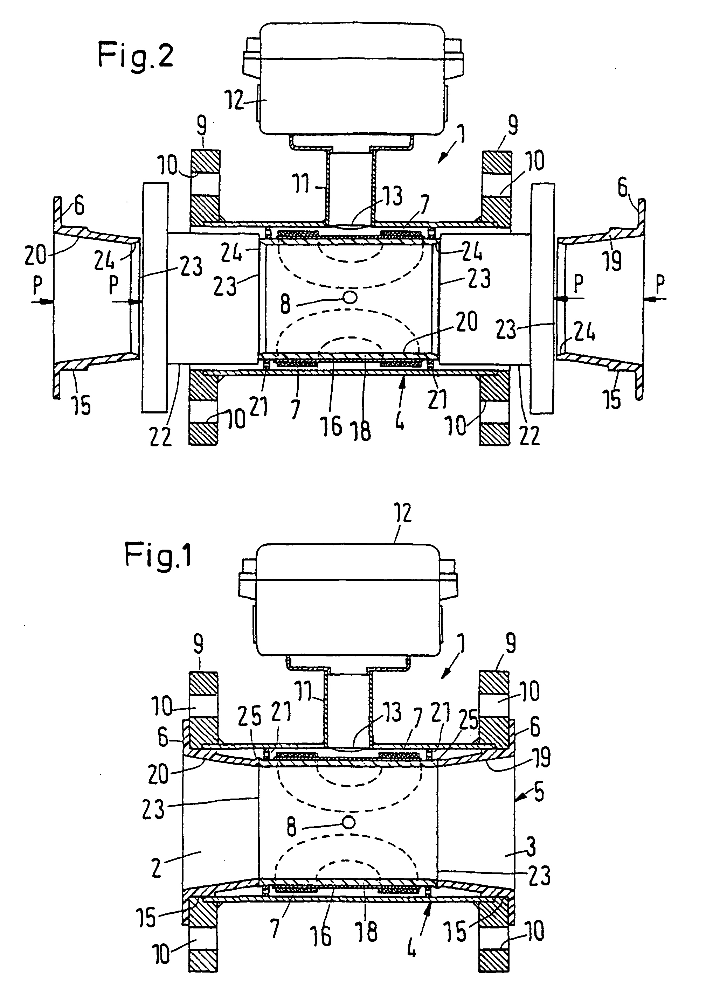

Der elektromagnetische Durchflußmesser 1 nach Fig. 1 hat eine Einlaßöffnung 2 und eine Auslaßöffnung 3. In einem druckfesten Außenrohr 4 aus einem magnetisch leitenden Material ist ein Innenrohr 5 aus Polyethylen (PE), vorzugsweise hochdichtes Polyethylen (HPDE), angeordnet, das an seinen Enden radial nach außen ragende Flansche 6 hat. Das Außenrohr 4 und das Innenrohr 5 begrenzen zwischen sich einen Ringraum, in dem eine Magnetspulenanordnung 7, bestehend aus zwei Magnetspulen, in nicht dargestelltem thermoplastischem Kunststoff eingegossen ist, so daß sie zwischen den Innenseiten von Außenrohr 4 und Innenrohr 5 liegt. Die Magnetspulenanordnung 7 dient zur Erzeugung eines Magnetfelds, das senkrecht zur Strömungsrichtung des das Innenrohr durchströmenden Fluids, dessen Durchfluß gemessen werden soll, gerichtet ist. Das Innenrohr 5 ist von Meßelektroden 8 durchsetzt, die quer zur Magnetfeldrichtung einander gegenüberstehen. Die Meßelektroden 8 dienen zur Abnahme einer dem Durchfluß entsprechenden Meßspannung. Auf dem Außenrohr 4 sind an seinen Enden radial nach außen ragende Flansche 9 angebracht. Der Innendurchmesser der Flansche 9 ist abgestuft, wobei sie mit ihrer den größeren Durchmesser aufweisenden Stufe auf dem Außenrohr 4 aufsitzen und ihr kleinster Innendurchmesser gleich dem des Außenrohres 4 ist. Der Innendurchmesser der Flansche 9 kann aber auch gleich dem Außendurchmesser des Außenrohres 4 sein, wobei die Flansche 9 vollständig auf der Außenseite des Außenrohres 4 aufsitzen und die axial äußeren Stirnflächen der Flansche 9 mit den Enden des Außenrohres 4 bündig sind. Die Flansche 9 sind mit durchgehenden Löchern 10 für Verbindungsschrauben versehen. Auf einem am Außenrohr 4 befestigten Stutzen 11 ist ein Gehäuse 12 befestigt, das eine elektrische Schaltung enthält. Ferner hat das Außenrohr 4 im Stutzen 11 eine Öffnung 13 zur Durchführung eines elektrischen Verbindungskabels.

Die Flansche 6 des Innenrohres 5 sind mit den als Ring ausgebildeten Flanschen 9 stoffschlüssig verbunden.

Während das Außenrohr 4 bis zu seinen Enden durchgehend kreiszylindrisch ausgebildet ist, wobei sein Innendurchmesser und sein Außendurchmesser über die gesamte Länge des Außenrohres 4 konstant sind, hat das Innenrohr 5 zwischen seinen Flanschen 6 einen zur axialen Mitte hin abnehmenden Innendurchmesser und einen ebenfalls zur axialen Mitte hin abnehmenden Außendurchmesser. Darüber hinaus ist das Innenrohr 5 auf seiner Außenseite neben den Flanschen 6 jeweils mit einer Zentrierstufe 15 versehen, deren Außendurchmesser wenigstens gleich dem Innendurchmesser des Außenrohres 4 ist, vorzugsweise jedoch ein geringfügiges Übermaß hat. Auf der Außenseite des Innenrohres 5 in seinem axial mittleren Bereich liegt eine zylindrische elektrische Abschirmungseinrichtung 16 aus magnetisch nicht leitendem Material, z.B. Kupfer oder Aluminium, radial innerhalb der Magnetspulenanordnung 7 und koaxial zum Innenrohr 5. Zusätzlich zu den Meßelektroden 8 sind koaxial zur Magnetspulenanordnung 7 nicht dargestellte Erdungselektroden in der gleichen Weise wie die Meßelektroden 8, das Innenrohr dicht durchsetzend, befestigt. Die Erdungselektroden sind gegenüber den Meßelektroden um 90° in Umfangsrichtung des Innenrohres 5 versetzt angeordnet und kontaktieren unmittelbar die Abschirmungseinrichtung 16, so daß Verbindungsleitungen zwischen den Erdungselektroden und der Abschirmungseinrichtung 16 entfallen. Die Erdungselektroden dienen zur Erdung des durchströmenden Fluids und sind in der gleichen Querebene des Innenrohres 5 wie die Meßelektroden 8 angeordnet.

Das Innenrohr 5 besteht aus einem mittleren zylindrischen Abschnitt 18 und zwei mit diesem verbundenen weitgehend konischen Endabschnitten 19 und 20. Hierbei nimmt der Durchmesser der konischen Endabschnitte 19 und 20 innen und zum größten Teil auch außen vom mittleren zylindrischen Abschnitt 18 zu den Flanschen 6 hin zu. Auf dem mittleren Abschnitt 18 sind die Magnetspulenanordnung 7 und Abschirmeinrichtung 16 angebracht.

Der Durchflußmesser nach Fig. 1 wird folgendermaßen hergestellt: Zunächst wird das Außenrohr 4 in der gewünschten Länge von einem längeren Rohr abgeschnitten und mit dem Loch 13 versehen. Dann werden die Flansche 9 auf dem Außenrohr 4 und der Stutzen 11 konzentrisch zum Loch 13 an der Außenseite des Außenrohres 4 befestigt, zum Beispiel angeschweißt.

Die Abschnitte 19 und 20 werden vor dem Einsetzen des Innenrohres 5 in das Außenrohr 4 separat aus PE, insbesondere HDPE, in entsprechenden Formwerkzeugen vorgeformt. Der mittlere Abschnitt 18 wird in der gewünschten Länge von einem längeren Rohr abgeschnitten und mit der Magnetspulenanordnung 7, der hülsenförmigen Abschirmeinrichtung 16 sowie den Elektroden versehen. Die Enden 23 der Abschnitte 18, 19 und 20 werden schräg angefast.

Danach wird zunächst der mittlere Abschnitt 18 gemäß Fig. 2 mit der darauf vormontierten Meßeinrichtung (Magnetspulenanordnung 7 und Meßelektroden 8) in das Außenrohr 4 eingeführt und durch Abstandhalter 21, zum Beispiel mit Bohrungen versehene Ringe, wie dargestellt, oder Gummiklötze, die zwischen dem mittleren Abschnitt 18 und dem Außenrohr 4 angeordnet werden, in dem Außenrohr 4 festgehalten und zentriert. Sodann werden die konischen Endabschnitte 19 und 20 mit dem mittleren zylindrischen Abschnitt 18 im Spiegelschweißverfahren verbunden. Dabei werden zunächst zwei erhitzte metallische Werkzeuge 22, sogenannte "Heizspiegel", zum Beispiel aus Aluminium, gleichzeitig von beiden Enden des Außenrohres 4 her in dieses eingeführt und mit vorbestimmtem Druck P gegen die Endflächen des mittleren Abschnitts 18 gedrückt. Die Enden 23 des mittleren Abschnitts 18 sind ebenso wie die ihnen zugekehrten Enden 23 der Endabschnitte 19 und 20 innen jeweils mit einer Fase 24 versehen, das heißt abgeschrägt. Sofort nach der Einführung der Werkzeuge 22 oder gleichzeitig werden die Endabschnitte 19 und 20 mit ihren dem mittleren Abschnitt 18 zugekehrten Endflächen unter vorbestimmtem Druck P gegen die axial äußere Seite der Werkzeuge 22 gedrückt. Im Laufe einer vorbestimmten Haltezeit werden jetzt die an den Werkzeugen 22 anliegenden Endflächen der Innenrohrabschnitte 18 bis 20 erwärmt und aufgeschmolzen. Danach werden die Werkzeuge 22 entfernt und die Endabschnitte 19, 20 so schnell wie möglich gegen den mittleren Abschnitt 18 gedrückt. Dabei ist der Druck P so gewählt, daß die zunächst insgesamt etwas länger als das Außenrohr 4 ausgebildeten Innenrohrabschnitte 18 bis 20 an ihren Enden verformt und die Flansche 6 an die Flansche 9 gedrückt werden. Beim Zusammendrücken der aufgeschmolzenen Endflächen bilden die Fasen 24 an jeder Verbindungsstelle zunächst eine etwa V-förmige Nut, die dann jedoch durch das geschmolzene Material weitgehend ausgefüllt wird, so daß die Innenseite des Innenrohrs 5 gemäß Fig. 1 an den Enden 23 im Bereich der Schweißnaht weitgehend eben ist, während sich auf der Außenseite des Innenrohrs 5 etwas vorstehende Schweißwülste 25 bilden.

In den Schweißwerkzeugen 22 ist ein elektrisches Heizelement eingebaut. Alternativ können sie aber auch aus massivem Metall bestehen und in einem Heizofen auf die erforderliche Temperatur von etwa 230°C ±5°C erwärmt werden.

Die Flansche 6 und 9 werden dann in der erwähnten Weise stoffschlüssig verbunden. Dies dient zur Abdichtung des zunächst zwischen Außen- und Innenrohr 4, 5 entstehenden Hohlraums. Dieser Hohlraum wird dann durch Einspritzen eines thermoplastischen Kunststoffs, z.B. Polyurethan oder Epoxidharz, durch eine (nicht dargestellte) Öffnung im Außenrohr 4 hindurch ausgefüllt, wobei nach dem Aushärten des Kunststoffes, der dann einen relativ festen Zustand aufweist, die zuvor in dem Hohlraum verlegten, zu einem Kabel zusammengefaßten und wieder durch das Loch 13 hindurchgeführten Zuleitungen der Elektroden durch das Ausgießen des Hohlraums ebenso wie die Magnetspulenanordnung 7 und die elektrische Abschirmungseinrichtung 16 in ihrer Lage gesichert sind. Der zum Ausgießen des Hohlraums verwendete Kunststoff kann nach dem Aushärten einen harten und festen Zustand aufweisen, so daß er gleichzeitig, ebenso wie die Abstandshalter 21, zur radialen Abstützung des Innenrohres 5 gegen eine Verformung durch das hindurchströmende Fluid beiträgt.

Wenn der Durchflußmesser 1 durch Verbindungsschrauben, die durch die Löcher 10 und durch entsprechende Löcher in Flanschen von Anschlußrohren hindurchgeführt werden, mit diesen Anschlußrohren verbunden wird, wirken die Flansche 6 gleichzeitig als Dichtung zwischen dem Durchflußmesser 1 und den Anschlußrohren.

Dieses Herstellungsverfahren hat den Vorteil, daß das Außenrohr 4 und zumindest teilweise auch das Innenrohr 5 auf einfache Weise vorgefertigt werden können, bevor sie zusammengesetzt werden. Durch die Einbettung der Magnetspulenanordnung 7, Leitungen und Elektroden 8 in dem Hohlraum auf der Außenseite des Innenrohres 5 ergibt sich eine definierte und sichere Lage der Magnetspulenanordnung 7 im Außenrohr 4 relativ zu den Meßelektroden 8. Das Innenrohr 5 wird durch das Ausgießen versteift, so daß es relativ dünnwandig und sogar biegsam ausgebildet sein kann. Der zur axialen Mitte hin abnehmende Durchmesser des Innenrohres 5 ergibt eine höhere Strömungsgeschwindigkeit im mittleren Bereich des Rohres und damit eine größere Meßempfindlichkeit.

Die Herstellung des Innenrohrs 5 aus PE, insbesondere HDPE, hat den Vorteil, daß dieses Material nicht nur preiswert, sondern auch gesundheitlich unbedenklich ist und mit geringer Energie verarbeitet werden kann. Dennoch hat es eine für die meisten Anwendungsfälle ausreichende thermische Beständigkeit, Dichtigkeit und Festigkeit, insbesondere bei Verwendung von HDPE. Es ist recyclebar oder ohne Umweltbelastung verbrennbar.

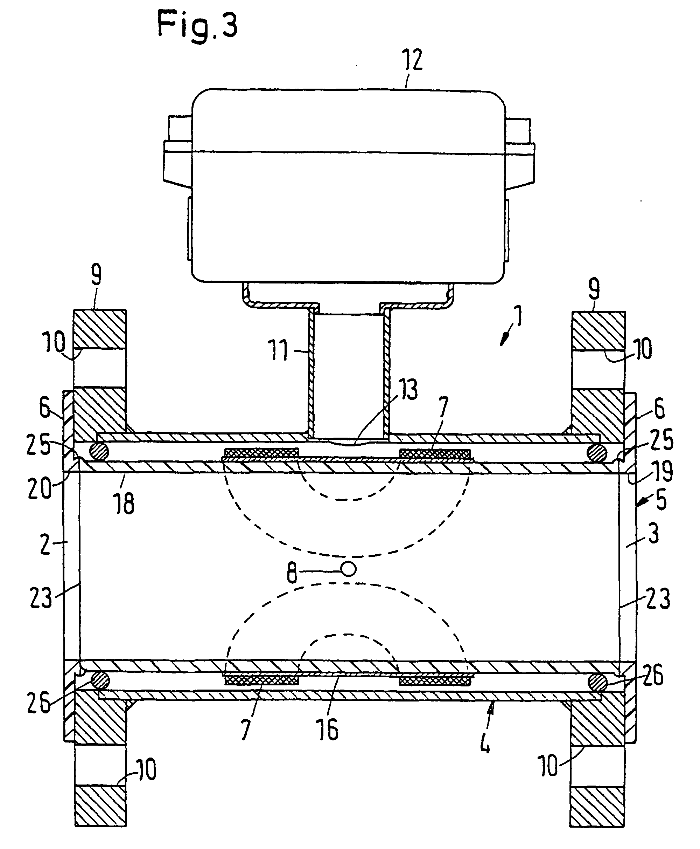

Fig. 3 zeigt ein weiteres Ausführungsbeispiel, das sich von dem nach den Fig. 1 und 2 nur dadurch unterscheidet, daß die Endabschnitte 19 und 20 des Innenrohrs 5 nicht konisch, sondern zylindrisch und erheblich kürzer als die Endabschnitte 19 und 20 bei dem Ausführungsbeispiel nach den Fig. 1 und 2 sind, während sich der mittlere Abschnitt 18 nahezu über die gesamte Länge des Außenrohrs 4 erstreckt. Ferner sind die Zentrierstufen 15 und Abstandshalter 21 entfallen und statt dessen Dichtringe 26 (O-Ringe) vorgesehen. Dieses Ausführungsbeispiel wird in der gleichen Weise wie das Ausführungsbeispiel nach den Fig. 1 und 2 hergestellt. Beim Ausfüllen des Hohlraums zwischen Außenrohr 4 und Innenrohr 5 bleiben die Ringräume zwischen den Dichtringen 26 und den benachbarten Flanschen 6 frei.

Die beschriebenen Ausführungsbeispiele können in vieler Hinsicht abgewandelt werden. So kann zunächst nur einer der konischen Abschnitte, beispielsweise der Endabschnitt 19, mit dem zylindrischen Abschnitt 18 verbunden werden, und nach der Einführung des zylindrischen Abschnitts 18 zusammen mit den darauf vormontierten Teilen 7, 16, 21 und mit dem konischen Endabschnitt 19 in das Außenrohr 4 kann dann der andere konische Abschnitt 20 mit dem zylindrischen Abschnitt 18 verbunden werden. Die Enden 23 der Abschnitte 18 bis 20 können durch Verschmelzung ihrer Kontaktbereiche bei gleichzeitigem axialen Zusammendrücken der Abschnitte verbunden werden. Eine weitere Alternative besteht darin, daß einer der konischen Endabschnitte, z.B. der Endabschnitt 19, einstückig mit dem zylindrischen Abschnitt 18 ausgebildet wird, bevor die Abschnitte 18 bis 20 in das Außenrohr 4 eingeführt werden.

Die Flansche 9 des Außenrohres 4 können aus einem anderen Material als das Außenrohr 4 hergestellt sein. Dabei können die Flansche 9 des Außenrohres 4 mit der erforderlichen Festigkeit ausgebildet werden, so daß sie der Spannkraft beim Verbinden mit Flanschen von Anschlußrohren und dem Fluiddruck standhalten. Vorzugsweise sind die Flansche 9 ebenso wie das Außenrohr 4 aus Metall hergestellt.

Sodann ist es möglich, das Innenrohr 5 nicht vollständig aus PE oder HDPE herzustellen, sondern beispielsweise nur eine innere Schicht, und/oder das Innenrohr mit einer Faserverstärkung zu versehen.

## Patentansprüche

1. Elektromagnetischer Durchflußmesser (1) mit einem Meßrohr, das ein druckfestes Außenrohr (4), ein Innenrohr (5) aus einem elektrisch isolierenden Material mit radial nach außen gerichteten Flanschen (6) an seinen Enden, die an den Enden des Außenrohres (4) anliegen, eine Magnetspulenanordnung (7) mit wenigstens einer Magnetspule zwischen den Innenseiten von Außen- und Innenrohr (4, 5) zur Erzeugung eines Magnetfelds, das senkrecht zur Strömungsrichtung des das Meßrohr durchströmenden Fluids gerichtet ist, und das Innenrohr (5) durchsetzende Meßelektroden (8) zur Abnahme einer dem Durchfluß entsprechenden Meßspannung aufweist, **dadurch gekennzeichnet, daß** das Innenrohr (5) zwei durch eine Spiegelverschweißung stoffschlüssig miteinander verbundene Abschnitte (18, 19) aus Polyethylen (PE) aufweist.

2. Durchflußmesser nach Anspruch 1, **dadurch gekennzeichnet, daß** das Polyethylen ein hochdichtes Polyethylen (HDPE) ist.

3. Durchflußmesser nach Anspruch 1 oder 2, **dadurch gekennzeichnet, daß** das Innenrohr (5) zwischen seinen Flanschen (6) mit einem zur axialen Mitte hin abnehmenden Innendurchmesser ausgebildet ist.

4. Verfahren zur Herstellung eines elektromagnetischen Durchflußmessers (1) nach einem der Ansprüche 1 bis 3, **dadurch gekennzeichnet, daß** das Innenrohr (5) aus zwei Endabschnitten (19, 20) mit Flanschen (6) und einem mittleren, zwischen den Endabschnitten (19, 20) liegenden zylindrischen Abschnitt (18) hergestellt wird, wobei das eine Ende (23) des einen Endabschnitts (20) nach der Einführung des zylindrischen Abschnitts (18) in das Außenrohr (4) mit dem einen Ende (23) des zylindrischen Abschnitts (18) durch Spiegelschweißen verbunden und der zylindrische Abschnitt (18) vor der Einführung ins Außenrohr (4) mit der Magnetspulenanordnung (7) und den Meßelektroden (8) versehen wird.

5. Verfahren nach Anspruch 4, **dadurch gekennzeichnet, daß** die Endabschnitte (19, 20) sich zu den Enden des Außenrohres (4) im wesentlichen konisch erweiternd ausgebildet werden.

6. Verfahren nach Anspruch 4 oder 5, **dadurch gekennzeichnet, daß** der mittlere Abschnitt (18) und der andere Endabschnitt (19) getrennt hergestellt werden und das andere Ende des zylindrischen Abschnitts (18) mit dem anderen Endabschnitt (19) stoffschlüssig verbunden wird.

7. Verfahren nach einem der Ansprüche 4 bis 6, **dadurch gekennzeichnet, daß** der mittlere Abschnitt (18) mit den Endabschnitten (19, 20) durch Spiegelschweißen verbunden wird, wobei die zu verbindenden Enden der Innenrohrabschnitte (18-20) zuvor auf ihrer Innenseite mit einer Fase (24) versehen werden.

8. Verfahren nach einen der Ansprüche 4 bis 7, **dadurch gekennzeichnet, daß** der Zwischenraum zwischen dem Außenrohr (4) und dem ins Außenrohr (4) zusammen mit der Magnetspulenanordnung (7) eingeführten Innenrohr (5) mit Kunststoff durch eine Öffnung im Außenrohr (4) hindurch ausgegossen wird.

9. Verfahren nach einem der Ansprüche 4 bis 8, **dadurch gekennzeichnet, daß** zwischen der Magnetspulenanordnung (7) und dem Innenrohr (5) eine zu diesem konzentrische elektrische Abschirmungseinrichtung (16) aus nichtmagnetischem Metall angeordnet wird.

10. Verfahren nach einem der Ansprüche 4 bis 9, **dadurch gekennzeichnet, daß** das Außenrohr (4) aus einem magnetisch leitenden Material hergestellt wird.

11. Verfahren nach einem der Ansprüche 4 bis 10, **dadurch gekennzeichnet, daß** außen an den Außenrohrenden Flansche (9) angebracht und die Flansche (6, 9) von Außen- und Innenrohr (4, 5) stoffschlüssig verbunden werden.

12. Verfahren nach einem der Ansprüche 4 bis 11, **dadurch gekennzeichnet, daß** das Innenrohr (5) neben seinen Flanschen (6) mit Zentrierstufen (15) ausgebildet wird.

## Claims

1. Electromagnetic flow meter (1) having a measuring pipe which has a pressure-tight external pipe (4), an internal pipe (5) made of an electrically insulating material with radially outwardly directed flanges (6) at its ends which bear against the ends of the external pipe (4), a solenoid arrangement (7) having at least one solenoid between the insides of the external pipe and internal pipe (4, 5) for generating a magnetic field which is directed perpendicularly to the direction of flow of the fluid flowing through the measurement pipe, and measuring electrodes (8) which penetrate the internal pipe (5) and have the purpose of picking up a measuring voltage corresponding to the flow rate, **characterized in that** the internal pipe (5) has two sections (18, 19) which are connected to one another in a materially joined fashion by means of a mirror weld and are composed of polyethylene (PE).

2. Flow meter according to Claim 1, **characterized in that** the polyethylene is a high-density polyethylene (HDPE).

3. Flow meter according to Claim 1 or 2, **characterized in that** the internal pipe (5) is constructed between its flanges (6) with an internal diameter which decreases towards the axial centre.

4. Method for manufacturing an electromagnetic flow meter (1) according to one of Claims 1 to 3, **characterized in that** the internal pipe (5) is manufactured from two end sections (19, 20) with flanges (6) and a central cylindrical section (18) lying between the end sections (19, 20), wherein one (23) of the ends of the one end section (20) is connected to one (23) of the ends of the cylindrical section (18) by mirror welding after the cylindrical section (18) has been inserted into the external pipe (4), and the cylindrical section (18) is provided with the solenoid arrangement (7) and the measuring electrodes (8) before the insertion into the external pipe (4).

5. Method according to Claim 4, **characterized in that** the end sections (19, 20) have a design which widens essentially in the shape of a cone at the ends of the external pipe (4).

6. Method according to Claim 4 or 5, **characterized in that** the central section (18) and the other end section (19) are manufactured separately from one another, and the other end of the cylindrical section (18) is connected in a materially joined fashion to the other end section (19).

7. Method according to one of Claims 4 to 6, **characterized in that** the central section (18) is connected to the end sections (19, 20) by mirror welding, with the ends of the internal pipe sections (18-20) which are to be connected being previously provided with a chamfer (24) on their inner side.

8. Method according to one of Claims 4 to 7, **characterized in that** the intermediate space between the external pipe (4) and the internal pipe (5) which is introduced into the external pipe (4) together with the solenoid arrangement (7) is filled with plastic through an opening in the external pipe (4).

9. Method according to one of Claims 4 to 8, **characterized in that** an electric screening device (16) which is concentric with respect to the internal pipe (5) and is made of non-magnetic metal is arranged between the solenoid arrangement (7) and said internal pipe (5).

10. Method according to one of Claims 4 to 9, **characterized in that** the external pipe (4) is manufactured from a magnetically permeable material.

11. Method according to one of Claims 4 to 10, **characterized in that** flanges (9) are provided on the outside of the external pipe ends and the flanges (6, 9) of the external pipe (4) and internal pipe (5) are connected in a materially joined fashion.

12. Method according to one of Claims 4 to 11, **characterized in that** the internal pipe (5) is constructed with centring stages (15) next to its flanges (6).

## Revendications

1. Débitmètre (1) électromagnétique comprenant un tube de mesure, qui comporte un tube (4) extérieur résistant à la pression, un tube (5) intérieur en un matériau isolant du point de vue électrique, ayant des brides (6) dirigées radialement vers l'extérieur à ses extrémités, qui s'appliquent aux extrémités du tube (4) extérieur, un dispositif (7) de bobine d'électroaimant ayant au moins une bobine d'électroaimant entre les faces intérieures du tube (4) extérieur et du tube (5) intérieur pour la production d'un champ magnétique, qui est dirigé perpendiculairement à la direction d'écoulement du fluide passant dans le tube de mesure, et des électrodes (8) de mesure traversant le tube (5) intérieur de prélèvement d'une tension de mesure correspondant au débit, **caractérisé en ce que** le tube (5) intérieur comporte deux tronçons (18, 19) en polyéthylène (PE) reliés l'un à l'autre à complémentarité de matière par un soudage en bout à l'aide de réflecteurs.

2. Débitmètre suivant la revendication 1, **caractérisé en ce que** le polyéthylène est un polyéthylène haute densité (HDPE).

3. Débitmètre suivant la revendication 1 ou 2, **caractérisé en ce que** le tube (5) intérieur est constitué entre ces brides (6) en ayant un diamètre intérieur, qui diminue vers le milieu axial.

4. Procédé de fabrication d'un débitmètre (1) électromagnétique suivant l'une des revendications 1 à 3, **caractérisé en ce que** l'on fabrique le tube (5) intérieur en deux tronçons (19, 20) d'extrémité ayant des brides (6) et en un tronçon (18) médian cylindrique entre les tronçons (19, 20) d'extrémité, l'une des extrémités (23) de l'un des tronçons (20) d'extrémité étant reliée par soudage en bout à l'aide de réflecteurs, après l'introduction du tronçon (18) cylindrique dans le tube (4) extérieur, à l'extrémité (23) du tronçon (18) cylindrique et le tronçon (18) cylindrique étant muni, avant l'introduction dans le tube (4) extérieur, du dispositif (7) de bobine d'électroaimant et des électrodes (8) de mesure.

5. Procédé suivant la revendication 4, **caractérisé en ce que** les tronçons (19, 20) d'extrémité s'élargissent sensiblement coniquement vers les extrémités du tube (4) extérieur.

6. Procédé suivant la revendication 4 ou 5, **caractérisé en ce que** le tronçon (18) médian et l'autre tronçon (19) d'extrémité sont fabriqués séparément et l'autre extrémité du tronçon (18) cylindrique est reliée à complémentarité de matière avec l'autre tronçon (19) d'extrémité.

7. Procédé suivant l'une des revendications 4 à 6, **caractérisé en ce que** le tronçon (18) médian est relié au tronçon (19, 20) d'extrémité par soudage en bout à l'aide de réflecteurs, les extrémités à relier des tronçons (18 à 20) du tube intérieur étant munies au préalable d'un chanfrein (24) sur leur face intérieure.

8. Procédé suivant l'une des revendications 4 à 7, **caractérisé en ce que** l'espace intermédiaire, compris entre le tube (4) extérieur et le tube (5) intérieur introduit dans le tube (4) extérieur en même temps que le dispositif (7) à bobine d'électroaimant, est empli par coulée de matière plastique par une ouverture ménagée dans le tube (4) extérieur.

9. Procédé suivant l'une des revendications 4 à 8, **caractérisé en ce qu'**il est interposé, entre le dispositif (7) à bobine d'électroaimant et le tube (5) intérieur, un dispositif (16) de blindage électrique, concentrique au tube (5) intérieur et en métal amagnétique.

10. Procédé suivant l'une des revendications 4 à 9, **caractérisé en ce que** le tube (4) extérieur est en un matériau conducteur magnétiquement.

11. Procédé suivant l'une des revendications 4 à 10, **caractérisé en ce qu'**il est ménagé à l'extérieur sur les extrémités du tube extérieur, des brides (9) et les brides (6, 9) des tubes (4, 5) extérieur et intérieur sont reliées à complémentarité de matière.

12. Procédé suivant l'une des revendications 4 à 11, **caractérisé en ce que** le tube (5) intérieur est constitué à côté de ses brides (6) de paliers (15) de centrage.
